(19) Europäisches Patentamt
European Patent Office
Office européen des brevets

(11) Veröffentlichungsnummer: **0 663 414 A1**

(12) **EUROPÄISCHE PATENTANMELDUNG**

(21) Anmeldenummer: **94117965.7**

(22) Anmeldetag: **15.11.94**

(51) Int. Cl.[6]: **C08G 59/68**, C08G 59/58, C09D 5/03

(30) Priorität: **14.01.94 DE 4400930**
**02.02.94 DE 4403129**

(43) Veröffentlichungstag der Anmeldung: **19.07.95 Patentblatt 95/29**

(84) Benannte Vertragsstaaten: **AT BE CH DE ES FR GB IT LI NL**

(71) Anmelder: **HÜLS AKTIENGESELLSCHAFT**
**D-45764 Marl (DE)**

(72) Erfinder: **Gras, Rainer, Dr.**
**Im Ostholz 49 a**
**D-44879 Bochum (DE)**
Erfinder: **Wolf, Elmar, Dr.**
**Stauffenbergstrasse 7**
**D-45661 Recklinghausen (DE)**

(54) **Verfahren zur Herstellung von matten Epoxidharz- und Hybrid-Pulverbeschichtungen.**

(57) Die Erfindung betrifft ein Verfahren zur Herstellung von matten Epoxidharz- und Hybrid-Pulverbeschichtungen, wobei als Härter ein Gemisch, bestehend aus:

a) Salzen der Phthalsäure, Isophthalsäure und Terephthalsäure, mit folgenden Aminen

A) 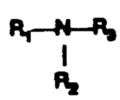 B) 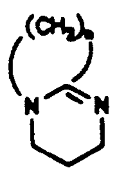 C) 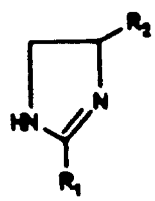

wobei $R_1$, $R_2$, $R_3$ gleiche oder verschiedene aliphatische, cycloaliphatische, araliphatische, aromatische Kohlenwasserstoffreste mit 1 - 20 C-Atomen und in der C-Kette eine oder mehrere $CH_2$-Gruppen durch O-Atome, durch $NR_4$-Gruppen mit $R_4 = C_{1-6}$-Alkyl, CH-OH-Gruppen, und/oder eine oder mehrere endständige Methylgruppen durch dialkylsubstituierte Aminogruppen mit 1 bis 6 Kohlenstoffatomen, ersetzt sein können, und $R_1$ und $R_2$ einen gemeinsamen Ring bilden können, in dem eine $CH_2$-Gruppe durch ein O-Atom oder durch eine $NR_4$-Gruppe ersetzt sein kann, und $R_1 = R_2 = R_3 = -CH_2-CH_2-$ über ein gemeinsames N-Atom gebunden sind und n: 3 - 11 bedeuten, und pro mol Säure 0,5 - 2 mol Amin A) - C) zur Reaktion kommen, und

b) Pyromellitsäure und/oder Trimellitsäure, wobei auf 1 mol a) 0,25 - 2 mol b) eingesetzt werden,

verwendet wird.

EP 0 663 414 A1

Die Erfindung betrifft ein Verfahren zur Herstellung von matten Epoxid- sowie Hybrid-Pulverbeschichtungen.

In der DE-OS 23 24 696 wird ein Verfahren zur Herstellung von matten Überzügen beschrieben, indem man Epoxidharze mit Salzen aus aromatischen Polycarbonsäuren, speziell Pyromellitsäure und cyclischen Amidinen, härtet. Bei diesem in der DE-OS 23 24 696 beschriebenen Verfahren ist es wesentlich, daß nicht die Einzelkomponenten, sondern deren Reaktionsprodukte, die Salze, zum Einsatz kommen.

Es ist weiterhin bekannt, daß man durch gleichzeitige Verwendung der beiden Einzelhärter - cyclisches Amidin und Polycarbonsäure - zwar zu gleich matten Oberflächen gelangt, wie dies bei Einsatz des aus denselben Einzelkomponenten bestehenden salzförmigen Matthärters der Fall ist, wobei jedoch Oberflächenstrukturierung und mindere physikalische Eigenschaften in Kauf genommen werden müssen.

Ferner ist bekannt, daß nur Salze aus cyclischen Amidinen mit Trimellit- bzw. Pyromellitsäure zur Herstellung von matten EP-Pulverbeschichtungen geeignet sind. Die entsprechenden Salze der Phthalsäure, Isophthalsäure sowie Terephthalsäure härten dagegen mit EP-Harzen zu glänzenden Filmen aus.

Es war Aufgabe der Erfindung, nach weiteren "Matt-Härtern" zu suchen.

Überraschenderweise wurde nun gefunden, daß man matte EP- sowie Hybrid-Pulverbeschichtungen erhält, ohne dies mit einer Verschlechterung der lacktechnischen Eigenschaften zu erkaufen, wenn man als Härterkomponente Salze der Iso-, Tere,- sowie Phthalsäure, die im Gemisch Pyromellitsäure und/oder Trimellitsäure enthalten, einsetzt, d. h. also, wenn als Härterkomponente Gemische aus Phthal-, Isophthal- und Terephthalsäuresalzen und den freien Säuren der Pyromellitsäure und/oder Trimellitsäure Verwendung finden.

Gegenstand der vorliegenden Erfindung ist daher ein Verfahren zur Herstellung von matten Epoxidharz- und Hybrid-Pulverbeschichtungen, welches dadurch gekennzeichnet ist, daß als Härter ein Gemisch, bestehend aus:

a) Salzen der Phthalsäure, Isophthalsäure und Terephthalsäure, mit folgenden Aminen:

A) 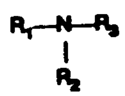 B) 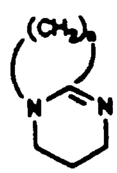 C) 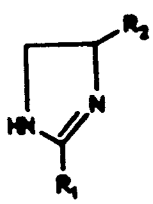

wobei $R_1$, $R_2$, $R_3$ gleiche oder verschiedene aliphatische, cycloaliphatische, araliphatische, aromatische Kohlenwasserstoffreste mit 1 - 20 C-Atomen und in der C-Kette eine oder mehrere $CH_2$-Gruppen durch O-Atome, durch $NR_4$-Gruppen mit $R_4 = C_{1-6}$-Alkyl, CH-OH-Gruppen, und/oder eine oder mehrere endständige Methylgruppen durch dialkylsubstituierte Aminogruppen mit 1 bis 6 Kohlenstoffatomen, ersetzt sein können, und $R_1$ und $R_2$ einen gemeinsamen Ring bilden können, in dem eine $CH_2$-Gruppe durch ein O-Atom oder durch eine $NR_4$-Gruppe ersetzt sein kann, und $R_1 = R_2 = R_3 = -CH_2-CH_2-$ über ein gemeinsames N-Atom gebunden sind und n: 3 - 11 bedeuten, und pro mol Säure 0,5 - 2 mol Amin A) - C) zur Reaktion kommen, und

b) Pyromellitsäure und/oder Trimellitsäure, wobei auf 1 mol a) 0,25 - 2 mol b) eingesetzt werden,

verwendet wird.

Die für das erfindungsgemäße Verfahren einsetzbaren Salze der Phthalsäure, Isophthalsäure sowie Terephthalsäure enthalten als Aminkomponente N-Verbindungen, die zur Salzbildung befähigt sind, wie z. B. N.N-Dimethylcyclohexylamin (DMCA), N.N-Dimethylanilin, N-Methylmorpholin, N.N'-Dimethylpiperazin, 2.2.6.6-Tetramethyl-4-dimethylaminopiperidin, N.N-Dimethyloctadecylamin, 1.8-Diazabicyclo-[5.4.0]-undec-7-en(Undec), N.N.N'.N'-Tetramethylhexamethylendiamin, 2-Phenylimidazolin (B 31), 1.4-Diazabicyclo[2.2.2]-octan (DABCO).

Der basische N-Gehalt der für das erfindungsgemäße Verfahren einsetzbaren Salze betragt 1 - 11 mmol/g; der Carboxylgruppengehalt 4 - 18 mmol/g.

Die zur Herstellung der pulverförmigen Überzugsmassen mit mattem Aussehen gemäß der vorliegenden Erfindung eingesetzten Härtergemische a) + b) werden in zwei Stufen hergestellt, wobei in der ersten Stufe die Salzbildung A) erfolgt und nach beendeter Salzbildung in einem zweiten Schritt die Pyro- bzw. Trimellitsäure zugegeben wird und man anschließend das Lösemittel entfernt. Die Salze a) sind z. T. bekannt und sind auch nicht Gegenstand der Erfindung. Sie werden in bekannter Weise hergestellt, wobei zu der in Wasser oder Ethanol gelösten Phthal-, Isophthal- und Terephthalsäure in der Siedehitze die Aminkomponente (A), B), C)) portionsweise zugegeben wird. Nach beendeter Aminzugabe wird noch ca.

eine Stunde weiter erhitzt. Danach erfolgt unter intensiver Rührung die Zugabe der Pyromellitsäure bzw. Trimellitsäure. Anschließend wird das Lösemittel durch Destillation entfernt, wobei es nicht erforderlich ist, daß die Pyromellit- bzw. Trimellitsäure gelöst sein muß.

Zur quantitativen Entfernung des Lösemittels wird das Reaktionsgemisch im Vakuumtrockenschrank bei 60 °C ca. 10 h getrocknet. Die Salze a) setzen sich aus 1 mol Phthalsäure und/oder Isophthalsäure und/oder Terephthalsäure und 0,5 - 2 mol Amin A), B), C) zusammen. Die Zusammensetzung der erfindungsgemäßen Härtermischung a) + b) besteht aus 1 mol aromatischer Dicarbonsäure (als Salz) und 0,25 - 2 mol Pyro- bzw. Trimellitsäure.

Wie bereits eingangs erwähnt, eignet sich das Härtergemisch a) + b) zur Herstellung von matten Epoxid- sowie Hybrid-Pulverbeschichtungen, wie sie z. B. in der DE-OS 23 24 696 beschrieben werden.

Zur Herstellung der pulverförmigen Überzugsmassen mit mattem Aussehen auf Basis von Polyepoxiden und gegebenenfalls Polymeren, die Carboxylgruppen enthalten, wird die Härtermischung a) + b) in Mengen von 3 - 14 Gew.-%, bezogen auf die Summe von Epoxidharz und dem gegebenenfalls vorhandenen COOH-Gruppen aufweisenden Polymeren, eingesetzt, wobei pro Mol aromatischer Dicarbonsäure (als Salz) 0,25 - 2 mol Pyro- bzw. Trimellitsäure vorliegen. Die verwendeten Polyepoxide sind feste, harzartige Stoffe, die im Bereich 60 - 150 °C, vorzugsweise 70 - 110 °C, schmelzen und die im Durchschnitt mehr als eine 1,2-Epoxidgruppe pro Molekül enthalten. Im Prinzip kommen alle Verbindungen infrage, die mehr als eine 1,2-Epoxidgruppe pro Molekül enthalten; bevorzugt werden allerdings handelsübliche EP-Harze, wie sie durch Umsetzung von Bisphenol A und Epichlorhydrin erhalten werden, mit einem EP-Äquivalentgewicht zwischen 400 - 3000, bevorzugt 800 - 1000.

Bei den carboxylgruppenhaltigen Polymeren handelt es sich um Polyesterpolycarbonsäuren, die aus Polyolen und Polycarbonsäuren bzw. deren Derivaten hergestellt werden. Der Schmelzbereich dieser sauren Polyester liegt in einem Bereich von 60 - 160 °C, vorzugsweise 80 - 120 °C; ihre Säurezahl variiert von 10 - 150 mg KOH/g, vorzugsweise 30 - 60 mg KOH/g. Die OH-Zahlen sollen unter 10 mg KOH/g liegen.

Für die Herstellung der erfindungsgemäß zu verwendenden Polyesterpolycarbonsäurenwerden Polycarbonsäuren, wie z. B. Oxal-, Adipin-, 2.2.4(2.4.4)-Trimethyladipin-, Azelain-, Sebacin-, Decandicarbon-, Dodecandicarbon-, Fumar-, Phthal-, Isophthal-, Terephthal-, Trimellit-, Pyromellitsäure eingesetzt. Als Polyole für die sauren Polyester werden folgende verwendet: Ethylenglykol, 1.2- und 1.3-Propandiol, 1.2-, 1.3-, 1.4- und 2.3-Butandiol, 1.5-Pentandiol, 3-Methyl-1.5-pentandiol, Neopentylglykol, 1.12-Dodecandiol, 2.2.4-(2.4.4)-Trimethyl-1.6-hexandiol, Trimethylolpropan, Glycerin, Pentaerythrit, 1.4-Bishydroxymethyl-cyclohexan, Cyclohexan-1.4-diol, Diethylenglykol, Triethylenglykol sowie Dipropylenglykol. Selbstverständlich können auch Hydroxylgruppen enthaltende Polyester, die nach bekannten Verfahren aus Polycarbonsäuren und Polyolen hergestellt werden mit Polycarbonsäuren und/oder Polycarbonsäureanhydriden zu den Polyesterpolycarbonsäuren umgesetzt werden.

Die Mengen der einzelnen Pulverlackbindemittelkomponenten können weitgehend variiert werden.

Im Falle der ausschließlichen Verwendung der handelsüblichen EP-Harze auf Bisphenol A-Basis (+ Epichlorhydrin) beträgt die Härterkonzentration 3 - 14 Gew.-%. Im Falle der Verwendung von Gemischen aus Epoxidharzen des Typs Diglycidylester des Bisphenol A und Carboxylgruppen enthaltender Polyester richtet sich das Mengenverhältnis nach der Säurezahl des Carboxylpolyesters. So wird z. B. üblicherweise bei einer Saurezahl 30 - 50 mg KOH/g das Gewichtsverhältnis EP-Harz/Carboxylpolyester 60 : 40 bis 80 : 20, vorzugsweise 70 : 30, betragen. Die Konzentration des Härtergemisches a) + b) beträgt in diesen EP-Harz/Carboxylpolyester-Gemischen 2 - 10 Gew.-%. Zur Herstellung des Pulverlacks werden die Bindemittel zusammen mit dem Verlaufmittel, Pigment und/oder Füllstoff und den UV- wie Oxidationsstabilisatoren zunächst gemischt und in einem Extruder bei ca. 100 °C homogenisiert. Die extrudierte Masse wird nach Abkühlung auf Raumtemperatur zu einem Pulverlack gemahlen, wobei die mittlere Teilchengröße ca. 40 - 80 µm, vorzugsweise 50 µm, betragen sollte.

Das Auftragen der so hergestellten Pulverlacke auf geeignete Substrate kann nach den bekannten Verfahren, wie z. B. durch elektrostatisches Pulversprühen, Wirbelsintern, erfolgen. Nach dem Auftragen des Pulverlacks nach einem der genannten Verfahren werden die beschichteten Substrate zur Aushärtung auf Temperaturen von 150 - 220 °C innerhalb von 30 - 8 min erhitzt. Die so hergestellten Lackfilme zeichnen sich durch sehr guten Verlauf und eine hervorragende Lösemittelbeständigkeit und eine matte Oberfläche aus, wobei der Glanzgrad in einem weiten Bereich beliebig einstellbar ist.

**I. Herstellung der erfindungsgemäßen Salze**

Allgemeine Herstellungsvorschrift

Zu der aromatischen Dicarbonsäure (Iso-, Tere-, Phthalsäure), die mit der 6- bis 10fachen Menge Ethanol bzw. $H_2O$ bis zum Siedepunkt des Lösemittels erhitzt wird, wird das Amin portionsweise zugegeben. Nach beendeter Aminzugabe wird noch ca. 1 h weiter erhitzt. Anschließend erfolgt die portionsweise Zugabe der in Ethanol bzw. $H_2O$ gelösten Pyromellitsäure (PMS). Nach der PMS-Zugabe

erfolgt die Entfernung des Lösemittels, in der Regel durch Abdestillieren. Zur quantitativen Entfernung des Lösemittels wird das Reaktionsprodukt noch im Vakuumtrockenschrank bei ca. 60 °C nachbehandelt.

Tabelle 1: Salzbeispiele

| Beispiel | Mole | | | | N | COOH |
|---|---|---|---|---|---|---|
| Nr. | Isophthalsäure | Amin | Pyromellitsäure | Smp °C | mmol/g | mmol/g |
| 1 | 0,5 | 0,25 B 31<br>0,25 DMCA | 0,5 | 217 - 223 | 2,69 | 10,50 |
| 2 | 0,5 | 0,5 DMCA | 0,5 | 188 - 197 | 1,51 | 10,71 |
| 3 | 0,5 | 0,5 DMCA | 0,25 | 177 - 185 | 2,25 | 9,32 |
| 4 | 0,5 | 0,5 B 31 | 0,5 | 213 - 217 | 3,41 | 8,92 |
| 5 | 0,5 | 0,5 B 31 | 0,5 | 212 - 220 | 3,35 | 8,85 |
| 6 | 0,5 | 0,5 B 31 | 0,625 | 188 - 193 | 3,18 | 9,52 |
| 7 | 0,5 | 1 B 31 | 0,5 | 208 - 215 | 5,56 | 7,04 |
| 8 | 0,5 | 0,5 B 31 | 0,75 | 210 - 215 | 2,88 | 7,75 |
| 9 | 0,5 | 1 B 31 | 1 | 185 - 189 | 4,14 | 8,27 |
| 10 | 0,25 | 1 B 31 | 0,75 | 204 - 214 | 5,10 | 9,10 |
| 11 | 0,5 | 0,5 Undec | 0,5 | 189 - 196 | 3,49 | 8,70 |
| 12 | 0,5 | 1 Undec | 0,5 | 225 - 230 | 5,47 | 5,51 |
| 13 | 0,5 | 0,25 Undec<br>0,25 B 31 | 0,5 | 198 - 207 | 3,47 | 8,73 |
| 14 | 0,5 | 0,5 Undec<br>0,5 B 31 | 0,5 | 230 - 235 | 5,51 | 5,50 |
| 15 | 0,5 | 0,5 DABCO | 0,5 | > 250 | 3,76 | 9,39 |
| 16 | 0,5 | 1 DABCO | 0,5 | > 250 | 6,2 | 6,2 |
| 17 | 0,5 | 0,25 DABCO<br>0,25 B 31 | 0,5 | 238 - 247 | 3,64 | 9,11 |
| 18 | 0,5 Terephthalsäure | 1 B 31 | 0,5 | 248 - 253 | 5,35 | 7,1 |
| 19 | 0,5 Terephthalsäure | 0,5 DMCA | 0,5 | 206 - 215 | 2,81 | 8,6 |
| 20 | 0,5 Terephthalsäure | 1 B 31 | 0,5 | 248 - 250 | 5,38 | 7,2 |
| 21 | 0,5 Terephthalsäure | 1 $N-CH_2-CH_2-N-CH_2-CH_2-N$ | 0,5 | 212 - 219 | 5,2 | 7,76 |
| 22 | 0,5 Terephthalsäure | 1 Undec | 0,5 | 246 - 253 | 5,49 | 5,50 |
| 23 | 0,5 Phthalsäure | 0,5 DMCA | 0,5 | 171 - 179 | 1,81 | 9,08 |
| 24 | 0,5 Phthalsäure | 0,25 DMCA<br>0,25 B 31 | 0,5 | 199 - 207 | 3,57 | 8,91 |

| Bei-spiel Nr. | Mole Isophthalsäure | Amin | Pyromellitsäure | Smp °C | N mmol/g | COOH mmol/g |
|---|---|---|---|---|---|---|
| 25 | 0,5 Phthalsäure | 0,5 B 31 | 0,5 | 198 - 202 | 3,30 | 10,4 |
| Vergleichsbeispiele | | | | | | |
| 26 | 1 Isophthalsäure | 1 B 31 | - | 145 - 152 | 6,20 | 6,4 |
| 27 | 1 Terephtalsäure | 0,5 B 31 | - | 239 - 246 | 3,70 | 8,2 |

**II. Epoxidharz**

In den Anwendungsbeispielen wurden als Epoxidharzverbindungen solche auf Bisphenol A-Basis eingesetzt. Sie sind durch folgende Kenndaten charakterisiert:

| Kenndaten / Beispiel | II.1 |
|---|---|
| Äquivalentgewicht | 900 - 1000 |
| Epoxidwert | 0,1 - 0,111 |
| Hydroxylwert | 0,34 |
| Schmelzbereich | 96 - 104 °C |

**III. Epoxidharz-Pulverlacke**

Zur Herstellung der Pulverlacke wurden die gemahlenen Produkte - Härter, Epoxidharz und Verlaufmittel-Masterbatch[1]- mit dem Weißpigment ($TiO_2$) in einem Kollergang innig vermischt und anschließend im Extruder bei 90 bis 110 °C homogenisiert. Nach dem Erkalten wurde das Extrudat gebrochen und in einer Stiftmühle auf eine Korngröße < 100 µm gemahlen. Das so hergestellte Pulver wurde mit einer elektrostatischen Pulverspritzanlage bei 60 kV auf entfettete, gegebenenfalls vorbehandelte Stahlbleche appliziert und in einem Labor-Umlufttrockenschrank eingebrannt.

Die Abkürzungen in den folgenden Tabelle bedeuten:

SD = Schichtstärke (µm)
GS = Gitterschnittprüfung (DIN 53 151)
ET = Tiefung n. Erichsen (mm) (DIN 53 156)
GG 60 °∡ = Glanz n. Gardner (ASTM-D 523)
Imp. rev. = Impact reverse (g•m)

Die Berechnung der Lack-Formulierungen erfolgte nach folgendem Schema:

[1] Verlaufmittel Masterbatch
10 Gew.-% Verlaufmittel auf Basis von polymeren Butylacrylaten werden mit den Epoxidharzen in der Schmelze homogenisiert und nach dem Erstarren zerkleinert.

| | |
|---|---|
| | Gew.-% EP = Epoxid |
| B - V = EP | B = Gew.-% Bindemittel<br>V = Gew.-% Vernetzer |
| B = 100 - Z | Z = Gew.-% Zuschlagstoffe [ 40 Gew.-% Weißpigment ($TiO_2$), 0,5 Gew.-% Verlaufmittel] |

## Lack-Beispiele

| Beispiel III | Vernetzer Gew.-% gemäß | Härtung °C/min | Mechanische Kenndaten SD | GS | ET | Imp. rev. | GG 60 °∢ |
|---|---|---|---|---|---|---|---|
| 1 | 5 I.1 | 200 12 | 70 - 80 | 0 | 7,3 - 7,8 | 460,8 | 10 |
| | | 15 | 80 | 0 | 8,2 - 8,5 | 806,4 | 12 |
| | | 180 20 | 50 - 60 | 0 | 7,3 | 345,6 | 13 - 15 |
| 2 | 5 I.2 | 200 15 | 50 - 60 | 0 | 5,6 - 6,1 | 115,2 | 10 |
| | | 20 | 60 - 70 | 0 | 5,8 - 6,7 | 115,2 | 9 |
| 3 | 5 I.4 | 200 12 | 50 - 55 | 0 | 9,3 | 806,4 | 9 |
| | | 15 | 60 - 70 | 0 | 9,1 - 9,5 | > 944,6 | 8 |
| | | 180 15 | 60 - 65 | 0 | 9,4 | > 944,6 | 13 |
| | | 170 25 | 50 - 60 | 0 | 9,3 | 806,4 | 14 |
| 4 | 5 I.5 | 200 12 | 50 - 65 | 0 | 8,8 - 9,1 | 691,2 | 9 |
| | | 15 | 60 - 70 | 0 | 9,3 - 9,5 | > 944,6 | 9 |
| 5 | 5 I.6 | 200 12 | 55 - 65 | 0 | 6,0 - 6,5 | 115,2 | 9 - 10 |
| | | 15 | 60 - 70 | 0 | 6,7 - 7,4 | 230,4 | 9 - 10 |
| | | 180 20 | 60 - 65 | 0 | 5,4 - 6,8 | 115,2 | 14 - 16 |
| 6 | 5 I.9 | 200 10 | 60 - 75 | 0 | 4,3 - 5,1 | 115,2 | 5 - 6 |
| | | 15 | 65 - 85 | 0 | 6,4 | 691,2 | 5 - 6 |
| | | 180 15 | 55 - 65 | 0 | 6,5 - 7,0 | 115,2 | 7 - 8 |
| | | 20 | 60 - 70 | 0 | 7,5 - 9,1 | 806,4 | 6 |
| | | 170 25 | 50 - 70 | 0 | 7,1 | 115,2 | 10 - 11 |
| 7 | 5 I.11 | 200 15 | 50 - 60 | 0 | 4,5 - 5,3 | < 115,2 | 25 - 27 |
| | | 20 | 60 - 75 | 0 | 6,7 - 7,4 | 230,4 | 27 - 28 |
| | | 180 25 | 55 - 65 | 0 | 5,2 - 5,8 | < 115,2 | 30 - 33 |
| 8 | 5,5 I.15 | 200 20 | 55 - 65 | 0 | 4,4 - 5,1 | < 115,2 | 25 - 31 |
| | | 30 | 60 - 70 | 0 | 6,7 - 7,7 | 230,4 | 33 - 36 |
| | | 180 30 | 60 - 70 | 0 | 4,9 - 5,5 | 115,2 | 30 - 35 |
| 9 | 5,5 I.17 | 200 15 | 60 - 70 | 0 | 4,9 - 5,6 | 115,2 | 22 - 25 |
| | | 25 | 55 - 75 | 0 | 6,8 - 7,5 | 230,4 | 24 - 27 |
| | | 180 25 | 65 - 80 | 0 | 5,4 - 6,3 | 115,2 | 29 - 33 |
| 10 | 5 I.21 | 200 15 | 50 - 60 | 0 | 7,5 - 7,7 | > 944,6 | 36 |
| | | 180 20 | 60 - 70 | 0 | 7,0 - 7,3 | 691,2 | 39 |
| 11 | 5 I.25 | 200 12 | 50 - 65 | 0 | 6,5 - 6,8 | 115,2 | 11 - 12 |
| | | 15 | 65 - 70 | 0 | 7,0 - 7,1 | 345,6 | 12 |
| | | 180 20 | 70 - 90 | 0 | 7,2 | 115,2 | 13 - 14 |

| Beispiel III | Vernetzer Gew.-% gemäß | Härtung °C/min | Mechanische Kenndaten SD | GS | ET | Imp. rev. | GG 60 °∢ |
|---|---|---|---|---|---|---|---|
| Vergleichsbeispiele | | | | | | | |
| 12 | 6 I.26 | 200 15 | 65 - 70 | 0 | 0,5 - 0,9 | < 115,2 | 28 |
| | | 30 | 60 - 70 | 0 | 0,6 - 0,8 | < 115,2 | 24 |
| 13 | 8 I.26 | 200 15 | 70 - 75 | 0 | 0,4 - 0,5 | < 115,2 | 18 |
| | | 30 | 55 - 70 | 0 | 0,5 - 0,7 | < 115,2 | 22 |
| 14 | 5 I.27 | 200 15 | 70 | 0 | 5,4 - 7,2 | 230,4 | 76 |
| | | 30 | 50 - 60 | 0 | 6,5 - 8,0 | 345,6 | 70 |
| 15 | 7 I.27 | 200 15 | 70 - 80 | 0 | 6,7 - 8,1 | 806,4 | 61 |
| | | 30 | 65 - 70 | 0 | 8,6 - 9,5 | > 944,6 | 59 |

**IV. Carboxylgruppenhaltiger Polyester**

Zur Herstellung von Hybrid-Pulverlacken wurden die nachfolgend beschriebenen carboxylgruppenhaltigen Polyester mit folgenden Kenndaten eingesetzt:

| | I | II |
|---|---|---|
| Säurezahl: | 52 - 58 mg KOH/g | 36 mg KOH/g |
| Schmelzbereich: | 104 - 106 °C | 91 - 94 °C |
| Glasumwandlungstemperatur: | ca. 58 °C | 64 °C |
| Viskosität bei 160 °C: | 33 400 mPa•s | 58.000 mPa•s |

**V. Hybrid-Pulverlacke**

Die Aufarbeitung der Rohstoffe sowie die Herstellung und Applikation erfolgt analog III.

| Lackbeispiele | | | | | | | | |
|---|---|---|---|---|---|---|---|---|
| Beispiel | Vernetzer Gew.-% gemäß | Härtung °C/min | | Mechanische Kenndaten | | | | |
| | | | | SD | GS | ET | Imp. rev. | GG 60 °∡ |
| 1 | 30 I.4<br>315 II.1<br>205 IV.1 | 200 | 12<br>15 | 60 - 70<br>50 - 60 | 0<br>0 | 6,3 - 7,0<br>7,2 - 8,0 | 115,2<br>230,4 | 25<br>26 |
| | 400 $TiO_2$[x]<br>50 Verl.-MB[x] | 180 | 25 | 55 - 60 | 0 | 5,5 - 6,5 | 115,2 | 25 |
| 2 | 50 I.14<br>350 II.1 | 200 | 10<br>15 | 45 - 60<br>55 - 65 | 0<br>0 | 6,5 - 7,8<br>7,4 - 8,4 | 115,2<br>345,6 | 17<br>18 |
| | 150 IV.2 | | | | | | | |
| | 400 $TiO_2$<br>50 Verl.-MB | 180 | 20<br>25 | 60 - 70<br>65 - 75 | 0<br>0 | 5,7 - 6,4<br>6,5 - 6,9 | 115,2<br>115,2 | 20<br>21 |
| 3 | 50 I.5<br>350 II.1 | 200 | 12<br>15 | 50 - 60<br>60 - 70 | 0<br>0 | 6,3 - 7,4<br>7,5 - 8,1 | 115,2<br>230,4 | 13<br>14 |
| | 150 IV.1<br>400 $TiO_2$<br>50 Verl.-MB | 180 | 25 | 55 - 70 | 0 | 5,3 - 6,4 | < 115,2 | 16 |
| **Bemerkung**:[x] $TiO_2$ (Weißpigment), Verl.-MB (Verlaufsmittel-Masterbatch) | | | | | | | | |

**Patentansprüche**

**1.** Verfahren zur Herstellung von matten Epoxidharz- und Hybrid-Pulverbeschichtungen, dadurch gekennzeichnet,
daß als Härter ein Gemisch, bestehend aus:
a) Salzen der Phthalsäure, Isophthalsäure und Terephthalsäure, mit folgenden Aminen

A) 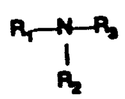 B) 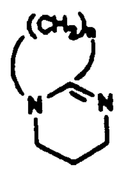 C) 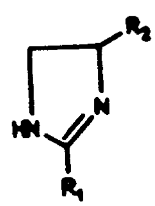

wobei $R_1$, $R_2$, $R_3$ gleiche oder verschiedene aliphatische, cycloaliphatische, araliphatische, aromatische Kohlenwasserstoffreste mit 1 - 20 C-Atomen und in der C-Kette eine oder mehrere $CH_2$-Gruppen durch O-Atome, durch $NR_4$-Gruppen mit $R_4 = C_{1-6}$-Alkyl, CH-OH-Gruppen, und/oder eine oder mehrere endständige Methylgruppen durch dialkylsubstituierte Aminogruppen mit 1 bis 6 Kohlenstoffatomen, ersetzt sein können, und $R_1$ und $R_2$ einen gemeinsamen Ring bilden können, in dem eine $CH_2$-Gruppe durch ein O-Atom oder durch eine $NR_4$-Gruppe ersetzt sein kann, und $R_1 = R_2 = R_3 = -CH_2-CH_2-$ über ein gemeinsames N-Atom gebunden sind und n: 3 - 11 bedeuten, und pro mol Säure 0,5 - 2 mol Amin A) - C) zur Reaktion kommen, und
b) Pyromellitsäure und/oder Trimellitsäure, wobei auf 1 mol a) 0,25 - 2 mol b) eingesetzt werden,
verwendet wird.

**2.** Verfahren zur Herstellung von matten Epoxidharz- und Hybrid-Pulverbeschichtungen nach Anspruch 1, dadurch gekennzeichnet,
daß die Härterkonzentration a) + b) 3 - 14 Gew.-%, bezogen auf die Summe von Epoxidharz und dem gegebenenfalls vorhandenen COO-Gruppen aufweisenden Polymeren, beträgt.

Europäisches Patentamt

# EUROPÄISCHER RECHERCHENBERICHT

Nummer der Anmeldung
EP 94 11 7965

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | PATENT ABSTRACTS OF JAPAN<br>vol. 9, no. 108 (C-280) 11. Mai 1985<br>& JP-A-60 001 221 (SUMITOMO BAKELITE KK)<br>7. Januar 1985<br>* Zusammenfassung *<br>--- | 1,2 | C08G59/68<br>C08G59/58<br>C09D5/03 |
| A | PATENT ABSTRACTS OF JAPAN<br>vol. 7, no. 277 (C-199) 9. Dezember 1983<br>& JP-A-58 154 715 (TOKYO SHIBAURA DENKI)<br>14. September 1983<br>* Zusammenfassung *<br>--- | 1 | |
| A | WO-A-91 08268 (THOMAS SWAN & CO)<br>* Ansprüche; Beispiele 1,5M *<br>--- | 1 | |
| A | DATABASE WPI<br>Derwent Publications Ltd., London, GB;<br>AN 82-20513E<br>& JP-A-57 021 465 (DAINIPPON INK CHEM) 4. Februar 1982<br>* Zusammenfassung *<br>--- | 1 | **RECHERCHIERTE SACHGEBIETE (Int.Cl.6)** |
| A | EP-A-0 253 115 (HÜLS AG)<br>* Ansprüche; Beispiele 3,9,14 *<br>----- | 1 | C08G |

Der vorliegende Recherchenbericht wurde für alle Patentansprüche erstellt

| Recherchenort | Abschlußdatum der Recherche | Prüfer |
|---|---|---|
| DEN HAAG | 19. April 1995 | Deraedt, G |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)